# EUROPÄISCHE PATENTSCHRIFT

(11) **EP 2 766 228 B1**
(45) Veröffentlichungstag und Bekanntmachung des Hinweises auf die Patenterteilung: **01.07.2015**
(21) Anmeldenummer: 12770050.8
(22) Anmeldetag: 25.09.2012
(51) Int. Cl.: B60N 2/00, B60N 2/02, B60R 21/013, B60R 21/015

(54) **VERFAHREN ZUM ANSTEUERN VON SICHERHEITSAKTUATORIK EINES KRAFTFAHRZEUGS**
METHOD FOR CONTROLLING SAFETY ACTUATING ELEMENTS OF A MOTOR VEHICLE
PROCÉDÉ DE COMMANDE D'UN SYSTÈME D'ACTIONNEMENT DE SÉCURITÉ PRÉVENTIVE D'UN VÉHICULE À MOTEUR

(30) Priorität: 10.10.2011 DE 102011084204
(43) Veröffentlichungstag der Anmeldung: 20.08.2014
(73) Patentinhaber: Robert Bosch GmbH, 70442 Stuttgart (DE)
(72) Erfinder: FREIENSTEIN, Heiko, 71263 Weil Der Stadt (DE); MAUR, Marcel, 71679 Asperg (DE)
(86) Internationale Anmeldenummer: PCT/EP2012/068820
(87) Internationale Veröffentlichungsnummer: WO 2013/053591

(56) Entgegenhaltungen:
- DE-A1- 10 305 013
- DE-A1-102005 038 226
- US-B1- 6 186 537

## Beschreibung

Die vorliegende Erfindung betrifft ein Verfahren zum Ansteuern von Sicherheitsaktuatorik eines Kraftfahrzeugs.

### Stand der Technik

Im Bereich der Sicherheitstechnik von Kraftfahrzeugen ist es bekannt, dass eine Stärke eines Eingriffs eines Sicherheitssystems unter Berücksichtigung einer Gefährdung von Fahrzeuginsassen, und/oder einer Fahrsituation und/oder einer

momentanen Stellung des Fahrzeugsitzes festgelegt werden kann.

Die Schrift DE 10 2005 038 226 A1 offenbart ein Verfahren gemäß dem Oberbegriff von Anspruch 1.

Beispielsweise offenbart WO 2004/103779 A1 ein Insassenschutzsystem eines Kraftfahrzeugs, welches durch eine schnelle Verstellung eines Fahrzeugsitzes diesen in eine Aufprall-optimierte Position bringt.

Aus "12. VDA Technischer Kongress 2010, Baumann et al., "PRE-SAFE Pulse, die Erweiterung des Insassenschutzes durch Nutzung der Vorunfallphase" ist ferner ein vorauslösendes, voranstoßendes System bekannt, welches einen Insassen des Kraftfahrzeugs in einem Frontaufprall eines Kraftfahrzeugs mittels eines Airbags oder eines Schultergurts in einer Vor-Aufprallphase derart vorbeschleunigt, dass sich eine Geschwindigkeit durch einen Aufprallpuls und eine Geschwindigkeit der Vorbeschleunigung destruktiv überlagern.

Bekannt sind bei Kraftfahrzeugen, insbesondere der oberen Klassen, elektromotorische Gurtstraffer. Weiterhin ist bei derartigen Kraftfahrzeugen eine vorausschauende Sensorik, zum Beispiel ein Radarsystem zu einer Abstandsregelung, sowie eine mittels einer automatischen Bremseinrichtung automatisch eingeleitete Bremsung bekannt.

### Offenbarung der Erfindung

Es ist die Aufgabe der vorliegenden Erfindung, ein verbessertes Verfahren zur Ansteuerung von Sicherheitsaktuatorik eines Kraftfahrzeugs bereitzustellen.

Die Aufgabe wird gelöst mit einem Verfahren zum Ansteuern von Sicherheitsaktuatorik eines Kraftfahrzeugs, aufweisend:
- Ermitteln eines Gefährdungsmodells des Kraftfahrzeugs mittels vorausschauender Sensorik und wenigstens eines Kennwerts einer Pose eines Fahrers des Kraftfahrzeugs;
- Ermitteln einer Kontrollierbarkeit des Kraftfahrzeugs durch einen Fahrer des Kraftfahrzeugs mittels des wenigstens einen Kennwerts; und
- Ansteuern der Sicherheitsaktuatorik in einem Ausmaß, welches vom Gefährdungsmodell und von der Kontrollierbarkeit abhängt.

Ein Vorteil des erfindungsgemäßen Verfahrens besteht darin, dass ein Grad eines Eingriffs der Sicherheitsaktuatorik auf den Fahrer des Kraftfahrzeugs von einer Kontrollierbarkeit des Kraftfahrzeugs durch den Fahrer abhängt und dadurch leicht beeinflussbar ist. Durch den kontrollierten Eingriff der Sicherheitsaktuatorik wird dem Fahrer eine Einflussnahme auf Bedienelemente des Kraftfahrzeugs und somit auf das Fahrverhalten des Kraftfahrzeugs in einem größtmöglichen Ausmaß belassen, so dass ein unter Umständen "überzogener" Eingriff der Sicherheitsaktuatorik auf den Fahrbetrieb unterbleibt bzw. stark reduziert ist. Aufgrund der Tatsache, dass das Gefährdungsmodell von wenigstens einem Kennwert einer Pose eines Fahrers des Kraftfahrzeugs abhängt, wird ein Auslöseverhalten der Sicherheitsaktuatorik vorteilhaft von einer Körperhaltung des Fahrers abhängig gemacht. Dadurch hat es der Fahrer durch ein Einnehmen einer günstigen Haltung in der Hand, das Sicherheitsniveau im Kraftfahrzeug zu maximieren.

Eine bevorzugte Ausführungsform des Verfahrens sieht vor, dass der wenigstens ein Kennwert durch ein Ausmaß eines Kontakts des Fahrers mit einer Rückenlehne einer Fahrzeugsitzeinrichtung definiert ist. Daraus ergibt sich als Vorteil, dass das Auslöseverhalten der Sicherheitsaktuatorik in nennenswertem Umfang auf einfache Weise verbessert werden kann.

Eine vorteilhafte Weiterbildung des Verfahrens sieht vor, dass der wenigstens ein Kennwert aus einer Neigung der Rückenlehne ermittelt wird. Vorteilhaft wird damit eine einfach erfassbare Größe zum Steuern eines Auslöseverhaltens der Sicherheitsaktuatorik verwendet.

Eine bevorzugte Weiterbildung des Verfahrens schlägt vor, dass der wenigstens ein Kennwert mittels eines Ultraschallsensors und/oder mittels eines Kontaktsensors und/oder mittels einer optischen Erfassungseinrichtung ermittelt wird. Damit kann der Kennwert der Pose des Fahrers vorteilhaft auf mehrere unterschiedliche Möglichkeiten, deren Wirkungsweise auch miteinander kombinierbar sind, ermittelt, wodurch sich in Abhängigkeit von einem Anforderungsprofil unterschiedliche Ausgestaltungen des Auslöseverhaltens der Sicherheitsaktuatorik realisieren lassen. Eine Skalierbarkeit eines Erfassungssystems für die Güte der Pose ist dadurch nach Anforderungsprofil implementierbar.

Eine bevorzugte Ausführungsform des Verfahrens schlägt vor, dass der wenigstens eine Kennwert durch eine Haltung einer Lenkeinrichtung durch den Fahrer definiert ist, wobei eine Abweichung der Haltung von einer vordefinierten Haltung ermittelt wird. In vorteilhafter Weise lässt sich das Auslöseverhalten der Sicherheitsaktuatorik durch ein Minimieren des Abweichungsgrades der Haltung einfach optimieren.

Eine bevorzugte Ausführungsform des Verfahrens sieht vor, dass die Haltung des Fahrers mittels eines Kontaktsensors und/oder eines Winkelsensors ermittelt wird. Dadurch werden vorteilhaft unterschiedliche Möglichkeiten zur Erfassung der Haltung der Lenkeinrichtung beeinflusst, wodurch das Auslöseverhalten der Sicherheitsaktuatorik effektiv beeinflusst werden kann.

Eine bevorzugte Ausführungsform des Verfahrens sieht vor, dass ein Lenkeinrichtungswinkel mit einem von einem Gierratensensor erfassten Gierwinkel des Kraftfahrzeugs korreliert wird. Mittels dieser Maßnahme ist vorteilhaft erkennbar, ob eine Kontrolle der Lenkeinrichtung durch den Fahrer tatsächlich vermindert ist oder ob vom Fahrer eine bewusst intendierte Lenkbewegung durchgeführt wird.

Eine vorteilhafte Weiterbildung des Verfahrens sieht vor, dass beim Ansteuern der Sicherheitsaktuatorik ein Fahrzeugsitzeinrichtungs-basiertes Rückhaltemittel verstellt wird. Fahrzeugsitzeinrichtungs-basierte Rückhaltemittel repräsentieren einen nennenswerten Anteil eines Schutzpotentials durch Sicherheitsaktuatorik im Kraftfahrzeug, so dass durch deren erfindungsgemäße Verstellung die Einflussnahme des Fahrers auf das Kraftfahrzeug vorteilhaft bedeutsam erhöht sein kann.

Bevorzugt ist vorgesehen, dass wenigstens eine Ebene der Fahrzeugsitzeinrichtung verstellt wird. Auf diese Weise kann vorteilhaft eine Position des Fahrers innerhalb des Kraftfahrzeugs verändert werden, sodass der Fahrer in einer Vor-Aufprall-Phase in sicherheitstechnischer Hinsicht in eine optimierte Position gebracht werden kann.

Eine vorteilhafte Weiterbildung des erfindungsgemäßen Verfahrens sieht vor, dass das Verstellen des Fahrzeugsitzeinrichtungs-basierten Rückhaltemittels im Wechselspiel mit einem Verstellen einer Gurtstraffereinrichtung des Kraftfahrzeugs durchgeführt wird. Dadurch ist unterstützt, dass dem Fahrer eine optimierte Einflussnahme auf das Kraftfahrzeug unter Berücksichtigung von maximierten Sicherheitsaspekten bereitgestellt wird.

Eine vorteilhafte Weiterbildung des erfindungsgemäßen Verfahrens sieht vor, dass ein Ausmaß eines Verstellwegs und/oder einer Verstellgeschwindigkeit des Fahrzeugsitzeinrichtungs-basierten Rückhaltemittels in Abhängigkeit vom Gefährdungsmodell und von der Kontrollierbarkeit des Kraftfahrzeugs ausgebildet ist. Damit wird vorteilhaft erreicht, dass ein Eingriff der Sicherheitsaktuatorik auf den Fahrer und dadurch eine Eingriffsmöglichkeit des Fahrers auf das Kraftfahrzeug situationsgerecht optimiert ist.

Bevorzugt ist vorgesehen, dass die vorausschauende Sensorik zur Ermittlung einer Vorphase eines Front- und/oder eines Seiten- und/oder eines Heckaufpralls des Kraftfahrzeugs verwendet wird. Dadurch wird das Gefährdungsmodell des Kraftfahrzeugs vorteilhaft für Vorphasen von unterschiedlichen Unfallszenarien bestimmt, so dass der Eingriff der Sicherheitsaktuatorik optimiert auf die Unfallcharakteristik abgestimmt wird.

Eine vorteilhafte Weiterbildung des Verfahrens sieht vor, dass das Gefährdungsmodell als ein Produkt einer Aufprall-Wahrscheinlichkeit mit einer vorausermittelten Aufprall-Schwere des Kraftfahrzeugs ausgebildet ist. Auf diese Weise wird das Gefährdungsmodell des Kraftfahrzeugs je nach individueller Fahrsituation vorausermittelt, so dass der Auslösungsgrad der Sicherheitsaktuatorik optimiert durchgeführt wird.

Eine vorteilhafte Weiterbildung des Verfahrens sieht vor, dass das Verfahren mittels eines Algorithmus implementiert ist. Dadurch wird eine einfach anzuwendende und einfach zu adaptierende Art der Ausführung des erfindungsgemäßen Verfahrens bereitgestellt.

Eine vorteilhafte Weiterbildung des Verfahrens schlägt vor, dass zu einem Wechsel zwischen Stützstellen des Algorithmus eine Nachschlagetabelle oder eine Interpolation verwendet wird. Vorteilhaft können auf diese Weise einfache Wechsel zwischen Stützstellen des Algorithmus durchgeführt werden, wodurch ein operatives Verhalten des Algorithmus in gewünschter Weise einfach angepasst werden kann.

Die Erfindung wird im Folgenden mit weiteren Merkmalen und Vorteilen anhand von mehreren Figuren detailliert erläutert. Die Figuren dienen vor allem dazu, die erfindungswesentlichen Prinzipien herauszuarbeiten und sind nicht dazu gedacht, dass ihnen konstruktive Details oder konkrete Einzelheiten von Verfahrensschritten entnommen werden können.

In den Figuren zeigt:
- Fig. 1: ein prinzipielles Blockschaltbild einer Ausführungsform des erfindungsgemäßen Verfahrens zum Ansteuern von Sicherheitsaktuatorik eines Kraftfahrzeugs;
- Fig. 2: ein prinzipielles Flussdiagramm einer Ausführungsform des erfindungsgemäßen Verfahrens;
- Fig. 3A und Fig. 3B: prinzipielle Darstellungen von Posen eines Fahrers eines Kraftfahrzeugs;
- Fig. 4A und Fig. 4B: prinzipielle Darstellungen von Haltungen einer Lenkeinrichtung durch einen Fahrer eines Kraftfahrzeugs; und
- Fig. 5: eine prinzipielle Darstellung von erfindungsgemäßen Eingriffen von Sicherheitsaktuatorik eines Kraftfahrzeugs in einer Vor-Unfallphase des Kraftfahrzeugs.

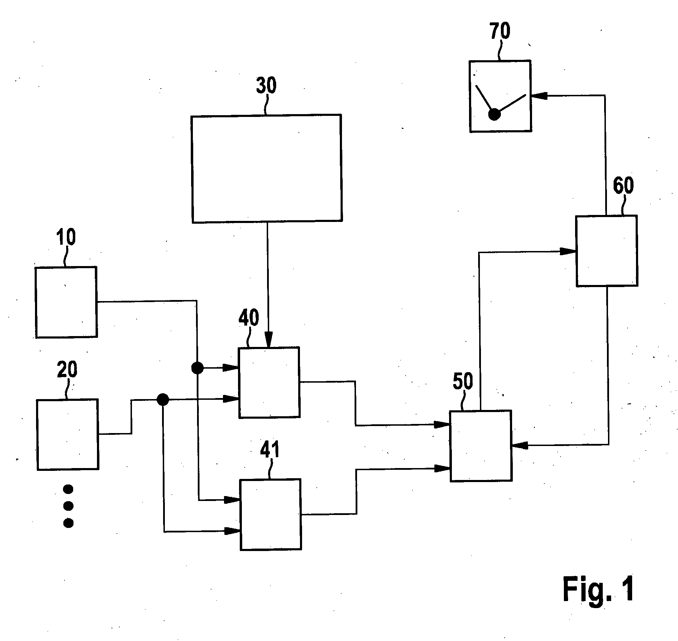

Fig. 1 zeigt eine Ausführungsform des erfindungsgemäßen Verfahrens zum Ansteuern von Sicherheitsaktuatorik eines Kraftfahrzeugs. Dabei wird mittels einer Situationserkennung 30 mit vorausschauender Sensorik des Kraftfahrzeugs (zum Beispiel Radarabstandssensorik, Kamera im Stoßfänger, usw.) sowie mittels eines ersten Kennwerts 10 einer Pose eines Fahrers des Kraftfahrzeugs (beispielsweise ein Ausmaß eines Kontakts des Fahrers mit einer Rückenlehne eines Fahrzeugsitzes) und mittels eines zweiten Kennwerts 20 einer Pose des Fahrers des Kraftfahrzeugs (zum Beispiel eine Güte einer Lenkradhaltung) ein Gefährdungsmodell 40 des Kraftfahrzeugs ermittelt. Alternativ oder auch zusätzlich zum ersten Kennwert 10 und zum zweiten Kennwert 20 sind auch noch weitere Kennwerte einer Pose eines Fahrers des Kraftfahrzeugs denkbar, was in der Figur 1 durch Punkte angedeutet ist. Ein Grad einer Gefährdung des Kraftfahrzeugs, der mittels der vorausschauenden Sensorik ermittelt wird, kann beispielsweise aus einem Produkt aus einer mittels Sensorik bestimmten Aufprall-Wahrscheinlichkeit und einer mittels Sensorik vorausbestimmten Aufprall-Schwere des Kraftfahrzeugs ermittelt werden.

Eine Ausgangsgröße des Gefährdungsmodells 40 wird einem Algorithmus 50 als eine Eingangsgröße zugeführt, wobei der Algorithmus 50 beispielsweise als ein Verstell-Algorithmus für eine Steuereinrichtung 60 (zum Beispiel ein elektronisches Kfz-Sitz-Steuergerät) des Kraftfahrzeugs ausgebildet ist. Eine Ausgangsgröße des Algorithmus 50 wirkt als eine Eingangsgröße auf die Steuereinrichtung 60 ein, indem der Algorithmus 50 der Steuereinrichtung 60 einen Sollwert vorgibt. Die Steuereinrichtung 60 ist durch eine Übermittlung eines Ist-Werts an den Algorithmus 50 mit dem Algorithmus 50 rückgekoppelt.

Die Steuereinrichtung 60 steuert eine Sicherheitsaktuatorik 70 des Kraftfahrzeugs an. Die Sicherheitsaktuatorik 70 kann beispielsweise als ein Fahrzeugsitzeinrichtungs-basiertes Rückhaltemittel ausgebildet sein. Das Fahrzeugsitzeinrichtungs-basierte Rückhaltemittel umfasst im einfachsten Falle eine Verstellung von Sitzverstellebenen, wobei eine Sitzhöhenverstellung, eine Sitzlängsverstellung, eine Verstellung von Sitzflächenneigung bzw. Sitzlehnenneigung oder auch eine Verstellung einer Kopfstütze oder einer Sitzkontur (beispielsweise durch Seitenwangen) vorgesehen sein können. In komplexeren Systemen kann das Verstellen des Fahrzeugsitzeinrichtungs-basierten Rückhaltemittels in einem Wechselspiel mit einer Gurtstraffereinrichtung des Kraftfahrzeugs, zum Beispiel zum Zwecke eines Beseitigens von Gurtlosen, durchgeführt werden. Auf die beschriebene Weise wird eine diversifizierte Sitzverstellung des Kraftfahrzeugs anhand von konkreten Gefährdungssituationen des Kraftfahrzeugs durchgeführt.

Erfindungsgemäß wird als Eingangsgröße für den Algorithmus 50 auch eine Kontrollierbarkeit 41 des Kraftfahrzeugs herangezogen. Die Kontrollierbarkeit 41 stellt ein Maß dafür da, inwieweit das Kraftfahrzeug aufgrund von einer Güte einer Sitzposition des Fahrers in einem Fahrzeugsitz des Kraftfahrzeugs kontrolliert werden kann und wird, ebenso wie das Gefährdungsmodell 40, mittels des ersten Kennwerts 10 und des zweiten Kennwerts 20 der Pose des Fahrers des Kraftfahrzeugs ermittelt. Die Kontrollierbarkeit 41 wird vorzugsweise mittels eines Zustandsbeobachters aus den Kennwerten 10, 20 der Fahrerpose geschätzt. Auf diese Weise ergibt sich für den Algorithmus 50 als Eingangsgröße - zusätzlich zu einer Ausgangsgröße des Gefährdungsmodells 40 - eine weitere Eingangsgröße in Form einer Ausgangsgröße der Kontrollierbarkeit 41.

Man kann der Fig. 1 entnehmen, dass mittels der Erfindung eine Verfeinerung des Algorithmus 50 dadurch erreicht wird, dass für den Algorithmus 50 eine weitere Eingangsgröße in Form der Kontrollierbarkeit 41 verwendet wird. Resultierend aus dieser Maßnahme wird auch eine Ausgangsgröße des Algorithmus 50 mittels der Erfindung insofern verfeinert bzw. verbessert, als mittels der genannten Ausgangsgröße die Steuereinrichtung 60 Vor-Unfall-Situationen situationsgerecht einstufen und dadurch eine Auslösestrategie für die nachgeschaltete Sicherheitsaktuatorik 70 verbessert ausgestalten kann. Bei der Ausführung des Algorithmus 50 können zu einem Wechsel zwischen Stützstellen des Algorithmus 50 beispielsweise eine Nachschlagetabelle (Look-Up-Table) oder eine Interpolation zwischen den Stützstellen des Algorithmus 50 verwendet werden.

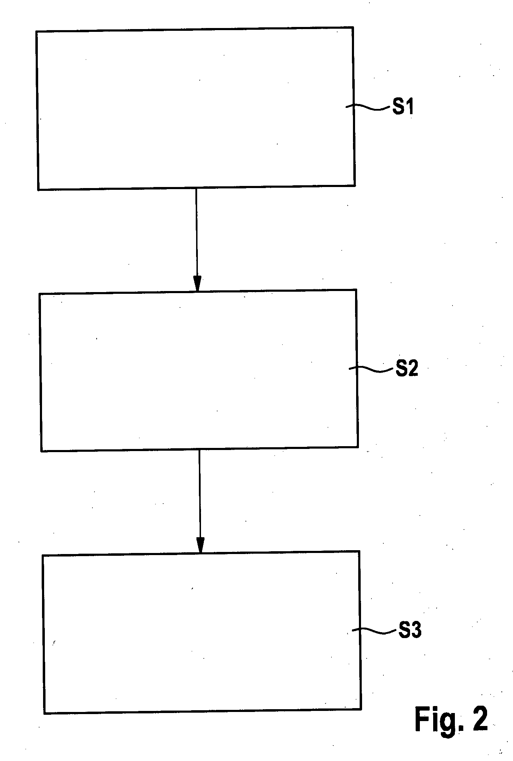

Fig. 2 zeigt anhand eines stark vereinfachten Flussdiagramms einen sequentiellen Ablauf einer Ausführungsform des erfindungsgemäßen Verfahrens. In einem ersten Schritt S1 wird ein Gefährdungsmodell 40 des Kraftfahrzeugs mittels vorausschauender Sensorik und wenigstens eines Kennwerts 10, 20 einer Pose eines Fahrers des Kraftfahrzeugs ermittelt. In einem zweiten Schritt S2 wird ein Ermitteln einer Kontrollierbarkeit 41 des Kraftfahrzeugs durch einen Fahrer des Kraftfahrzeugs mittels des wenigstens einen Kennwerts 10, 20 durchgeführt. Schließlich wird in einem dritten Schritt S3 die Sicherheitsaktuatorik 70 in einem Ausmaß angesteuert, welches vom Gefährdungsmodell 40 und von der Kontrollierbarkeit 41 abhängt.

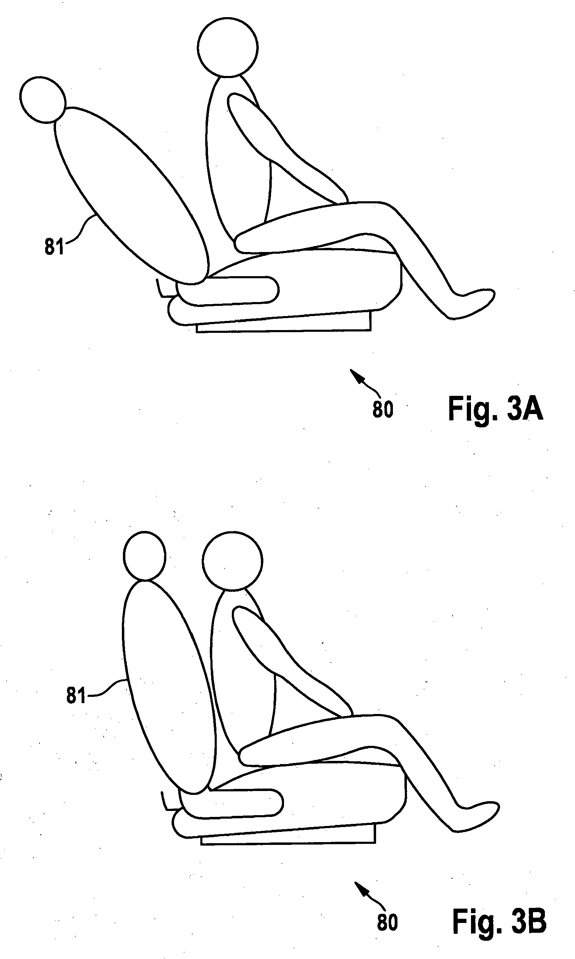

Die Figuren 3A und 3B zeigen stark vereinfachte, prinzipielle Beispiele für eine Güte einer Sitzposition eines Fahrers in einer Fahrzeugsitzeinrichtung 80. In Figur 3A ist erkennbar, dass ein Fahrer in einer Fahrzeugsitzeinrichtung 80 mit weit zurückgeneigter Rückenlehne 81 sitzt. Dadurch ergibt sich für den Fahrer in sicherheitstechnischer Hinsicht eine schlechte Sitzposition, als ein Rückenbereich des Fahrers im Wesentlichen keinen oder nur einen sehr geringen Kontakt mit der Rückenlehne 81 aufweist. Durch die dadurch bedingte fehlende oder sehr geringe Abstützung durch die Rückenlehne 81 nimmt der Fahrer eine instabile Haltung ein, die es ihm erschwert, abrupte Lenk- und/oder Bremsmanöver durchzuführen. Als Konsequenz würde dies im Falle eines starken Auslösens einer Sicherheitsaktuatorik 70 bedeuten, dass die ohnehin schon verringerte Kontrollierbarkeit 41 des Kraftfahrzeugs durch den Fahrer weiter verringert würde bzw. gänzlich ausgeschaltet wäre. Der Fahrer hätte somit keine Chance mehr, eine drohende Unfallsituation manuell zu korrigieren bzw. abzuwenden.

Demgegenüber deutet Figur 3B ein prinzipielles Beispiel für eine verbesserte Sitzposition des Fahrers in der Fahrzeugsitzeinrichtung 80 an. Es ist erkennbar, dass die Rückenlehne 81 nunmehr derart geneigt ist, dass ein Rückenbereich des Fahrers Kontakt mit der Rückenlehne 81 aufweist. Dadurch kann ein erfindungsgemäßes System, welches die Sicherheitsaktuatorik 70 ansteuert, erkennen, dass in der in Figur 3B gezeigten Sitzposition ein wesentlich größerer Eingriff der Sicherheitsaktuatorik 70 durchgeführt werden kann. Dies lässt sich damit begründen, dass die Kontrollierbarkeit 41 des Kraftfahrzeugs durch die stabile Sitzposition des Fahrers im Wesentlichen gut ausgebildet ist.

Für die Ermittlung einer Pose bzw. Sitzposition/-haltung des Fahrers in der Fahrzeugsitzeinrichtung 80 können mehrere Möglichkeiten vorgesehen sein. Beispielsweise können Kontaktsensoren (z.B. kapazitive Kontaktsensoren, nicht dargestellt) oder Sitzbelegungsmatten eine Art und ein Ausmaß eines Kontakts eines Rückenbereichs des Fahrers mit der Rückenlehne 81 detektieren. Mittels eines oder mehrerer kapazitiver Sensoren in der Rückenlehne 81 kann dazu der Abstand des Fahrers von der Rückenlehne 81 der Fahrzeugsitzeinrichtung 80 detektiert werden. Weiterhin ist es denkbar, dass optische und/oder akustische Erkennungssysteme, beispielsweise eine Videoerfassungseinrichtung oder eine Ultraschallsensorik die Sitzposition des Fahrers in der Fahrzeugsitzeinrichtung 80 ermitteln. Eine oder mehrere im Innenraum des Kraftfahrzeugs befindliche Ultraschallsensoren oder Videokameras (nicht dargestellt) können dabei alleine oder im Verbund mit anderen Informationen die Sitzposition des Fahrers detektieren.

Auch ein Neigungswinkel der Rückenlehne 81 der Fahrzeugsitzeinrichtung 80 kann ein Maß für die Kontrollierbarkeit 41 des Kraftfahrzeugs durch den Fahrer darstellen. Ist nämlich die Rückenlehne 81 zu stark geneigt, sind die Arme des Fahrers üblicherweise im Wesentlichen durchgestreckt. Dadurch ist eine Bewegungsfreiheit des Fahrers normalerweise stark eingeschränkt, was sich nachteilig auf die Kontrollierbarkeit 41 des Kraftfahrzeugs auswirken kann. Deshalb kann auch der Neigungswinkel der Fahrzeugsitzeinrichtung 80 als ein Kennwert 10, 20 für die Pose des Fahrers herangezogen werden und kann über die Verstellung der Fahrzeugsitzeinrichtung 80 oder mittels eines Neigungssensors (nicht dargestellt) erfasst werden. Der erfasste Winkel kann z.B. anhand eines Toleranzbandes, welches einen Bereich zwischen einem maximalen und einem minimalen Neigungswinkel definiert, bewertet werden.

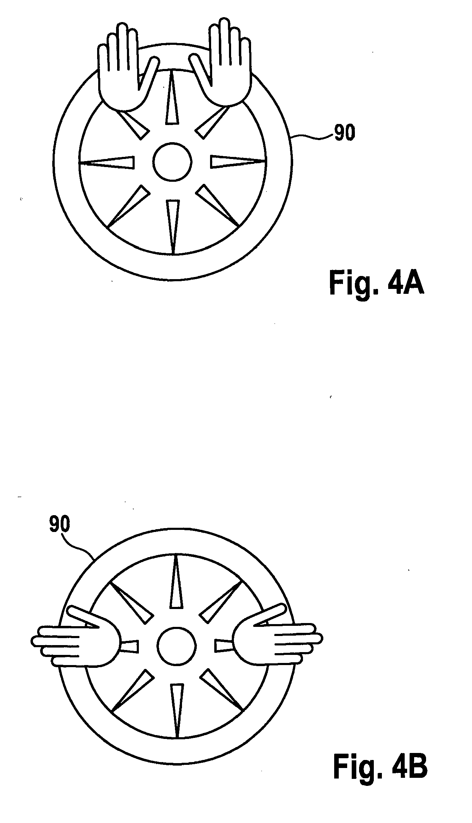

Die Figuren 4A und 4B verdeutlichen in prinzipieller Weise eine Kontrollierbarkeit 41 des Kraftfahrzeugs anhand einer Güte einer Haltung einer Lenkeinrichtung 90 (z.B ein Lenkrad) des Kraftfahrzeugs durch den Fahrer. Aus Figur 4A ist erkennbar, dass der Fahrer die Lenkeinrichtung 90 mit beiden Händen weit oben erfasst, was darauf schließen lässt, dass die Arme des Fahrers im Wesentlichen durchgestreckt sind. Daher ist anzunehmen, dass eine Kontrollierbarkeit 41 des Kraftfahrzeugs durch den Fahrer stark reduziert ist, was letztendlich eine geringe Güte der Lenkradhaltung impliziert. Demgegenüber deutet Fig. 4B eine "optimale" Lenkradhaltung an, die darin besteht, dass die beiden Hände des Fahrers die Lenkeinrichtung 90 ungefähr in den Positionen "3 Uhr" und "9 Uhr" umfassen. Es ist selbstverständlich intendiert, dass die optimale Haltung vordefiniert werden kann, wobei eine Abweichung von der optimalen Haltung als einer der Kennwerte 10, 20 in das erfindungsgemäße Verfahren einfließen kann. Die Abweichung kann beispielsweise anhand eines Toleranzbands definiert werden.

Die Position der Hände an der Lenkeinrichtung 90 kann z.B. mittels Kontaktsensoren (beispielsweise kapazitive Kontaktsensoren, nicht dargestellt) erfasst werden. Dadurch lässt sich auch feststellen, ob gerade ein- oder zweihändig gefahren wird. Zusätzlich könnte ermittelt werden, ob der Fahrer ein Getriebe des Kraftfahrzeugs gerade schaltet oder eine bewusste Lenkbewegung durchführt ("Übergreifen" der Lenkeinrichtung 90). Mittels eines Gierratensensors (nicht dargestellt), dessen Signal mit einem Signal eines Lenkradwinkelsensors (nicht dargestellt) zur Erfassung eines Winkels der Lenkeinrichtung 90 korreliert wird, kann beispielsweise eine derartige Information gewonnen werden. Starke Schwankungen mit erhöhter Frequenz in einem Ausgangssignal des Lenkradwinkelsensors können ein Indiz dafür sein, dass eine reduzierte Fahrzeugbeherrschung aufgrund von Ermüdung des Fahrers vorliegt. Alle genannten Parameter können als Kennwerte 10, 20 erfindungsgemäß in das erfindungsgemäße Verfahren zur Steuerung einer Auslösestrategie für die Sicherheitsaktuatorik 70 einfließen.

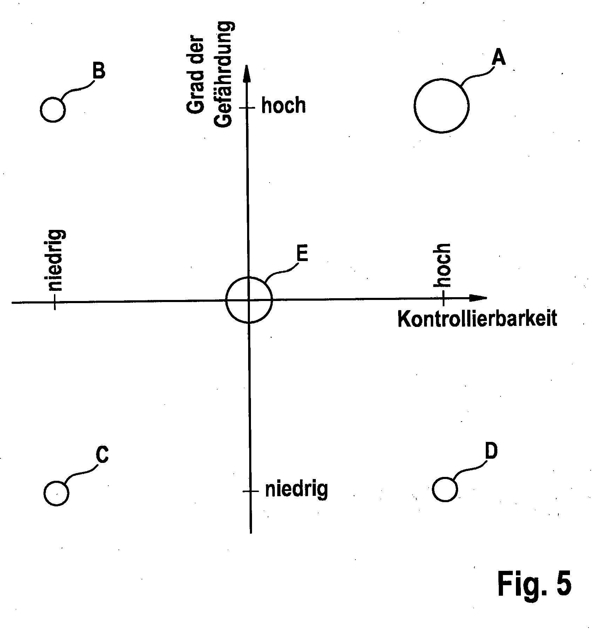

Fig. 5 zeigt anhand eines prinzipiellen Vier-Quadranten-Zustandsdiagramms eine prinzipielle Wirkungsweise des erfindungsgemäßen Verfahrens zum Ansteuern von Sicherheitsaktuatorik 70 eines Kraftfahrzeugs. In der Figur ist eine Abhängigkeit des Eingriffs der Sicherheitsaktuatorik 70 von den zwei Parametern "Grad der Gefährdung" und "Kontrollierbarkeit" exemplarisch an fünf Stützstellen dargestellt.

Die x-Achse des Diagramms skaliert eine Kontrollierbarkeit des Kraftfahrzeugs, die y-Achse des Diagramms skaliert einen Grad einer Gefährdung des Kraftfahrzeugs, der mittels der Situationserkennung 30 mit vorausschauender Sensorik ermittelt wird. Im ersten Quadranten des Diagramms von Fig. 5 ist ein Zustand einer hohen Kontrollierbarkeit 41 und eines hohen Gefährdungsgrads des Kraftfahrzeugs angedeutet. Resultierend daraus kann ein Eingriff A auf eine Sicherheitsaktuatorik 70 des Kraftfahrzeugs bzw. eine Stützstelle A des Algorithmus 50 (beispielsweise Verstellwege/Verstellgeschwindigkeit von Fahrzeugsitzen) stark ausgeprägt sein. Dies ist durch einen großen Kreisumfang bzw. einen großen Kreisdurchmesser des Eingriffs A graphisch angedeutet. Der an sich starke Eingriff A kann zwar eine erhöhte Wechselwirkung des Kraftfahrzeugs mit dem Fahrer bewirken, was sich in diesem Falle aber insofern nicht negativ auswirkt, als zum Zeitpunkt der Auslösung der Sicherheitsaktuatorik 70 ein hoher Grad an Kontrollierbarkeit 41 des Kraftfahrzeugs, das heißt eine im Wesentlichen stabile Fahrsituation vorliegt.

Im zweiten Quadranten des Diagramms von Figur 5 ist ein Zustand einer hohen Gefährdung und einer niedrigen Kontrollierbarkeit des Kraftfahrzeugs angedeutet. Resultierend daraus ist ein Eingriff B der Sicherheitsaktuatorik 70 (bzw. eine Stützstelle B des Algorithmus 50) auf das Kraftfahrzeug klein bzw. gering ausgebildet. Dies wird durch einen kleinen Kreisumfang bzw. einen kleinen Kreisdurchmesser des Eingriffs B angedeutet.

Im dritten Quadranten des Diagramms von Fig. 5 ist ein Zustand einer niedrigen Gefährdung und einer niedrigen Kontrollierbarkeit des Kraftfahrzeugs prinzipiell dargestellt. Resultierend daraus ist ein Eingriff der Sicherheitsaktuatorik 70 bzw. eine Stützstelle C des Algorithmus 50 gering ausgebildet, was durch eine graphische Darstellung (kleiner Kreisumfang, kleiner Kreisdurchmesser) des Eingriffs C angedeutet ist.

Im vierten Quadranten des Diagramms von Fig. 5 ist ein Zustand einer hohen Kontrollierbarkeit und einer niedrigen Gefährdung des Kraftfahrzeugs angedeutet. Resultierend daraus ist ein Eingriff D der Sicherheitsaktuatorik 70 des Kraftfahrzeugs bzw. eine Stützstelle D des Algorithmus 50 gering ausgebildet. Dies ist durch eine graphische Ausgestaltung (kleiner Kreisumfang, kleiner Kreisdurchmesser) des Eingriffs D angedeutet.

In einem Zustand, der einem Schnittpunkt von x- und y-Achse entspricht, liegen eine mittlere Kontrollierbarkeit und ein mittlerer Gefährdungsgrad des Kraftfahrzeugs vor. In diesem Falle ist ein Eingriff E der Sicherheitsaktuatorik 70 bzw. eine Stützstelle E des Algorithmus 50 - relativ zu den Eingriffen A,B,C,D - mittelgroß ausgebildet. Dies ist durch eine graphische Ausgestaltung (mittelgroßer Kreisumfang, mittelgroßer Kreisdurchmesser) des Eingriffs E angedeutet.

Aus Fig. 5 wird also klar, dass sich unter Umständen Eingriffe der Sicherheitsaktuatorik 70 auch gänzlich unterdrücken lassen. Bei einer hohen Kontrollierbarkeit 41 des Kraftfahrzeugs hängt demgegenüber ein Grad des Eingriffs der Sicherheitsaktuatorik 70 sehr von der Gefährdung des Kraftfahrzeugs ab. Bei einer hohen Gefährdung kann ein sehr starker Eingriff (Eingriff A) durchgeführt werden, der bis hin zu einem vorbeschleunigenden System reichen kann.

Vorteilhaft wird ein Fahrer des Kraftfahrzeugs im Fahrbetrieb durch das erfindungsgemäße Verfahren nicht unnötig irritiert, so dass je nach den Umständen eine bedrohliche Fahrsituation durch eine manuelle Einflussnahme des Fahrers (beispielsweise durch einen starken Lenkeingriff oder ein Betätigen des Bremspedals des Kraftfahrzeugs, usw.) unter Umständen auch noch korrigiert werden kann. Durch einen situationsgerecht angepassten Eingriff der Sicherheitsaktuatorik 70 wird dem Fahrer somit eine Gelegenheit an die Hand gegeben, drohende Unfall-Situationen durch persönliches Eingreifen (zum Beispiel Lenken, Bremsen) noch abzuwenden.

Es ist selbstverständlich beabsichtigt, dass mittels des erfindungsgemäßen Verfahrens jegliche Art von Sicherheitsaktuatorik 70 angesteuert, ausgelöst bzw. aktiviert werden kann. Die geschilderte Verstellung eines Fahrzeugsitz-basierten Rückhaltemittels ist deshalb lediglich als eines von vielen möglichen Beispielen von Sicherheitsaktuatorik 70 anzusehen und kann von jeglicher existierender, bzw. in Zukunft noch zu entwickelnder Sicherheitsaktuatorik 70 ergänzt bzw. ersetzt werden.

Im Falle des Fahrzeugsitzeinrichtungs-basierten Rückhaltemittels kann ein steigender Eingriffsgrad der Sicherheitsaktuatorik 70 eine Vergrößerung der Verstellwege bzw. eine Vergrößerung der Verstellgeschwindigkeit der Fahrzeugsitzeinrichtung 80 bedeuten, die unter Umständen mit einer elektromotorischen Aktion der Gurtstraffereinrichtung gekoppelt wird. Ferner kann der Eingriffsgrad von einer momentanen Sitzposition des Fahrers und einer Verstellungsrichtung des Fahrzeugsitz-basierten Rückhaltemittels abhängig sein.

Zusammenfassend wird mit der Erfindung ein Verfahren zum Ansteuern von Sicherheitsaktuatorik eines Kraftfahrzeugs vorgeschlagen, welches vorhandene und adaptierte Sicherheitssysteme bzw. -aktuatoren im Kraftfahrzeug optimiert ansteuert und ausnutzt. Insbesondere verwendet das erfindungsgemäße Verfahren zum Auslösen bzw. Ansteuern der Sicherheitsaktuatorik spezifische Informationen, welche definieren, wie gut ein Fahrer das Kraftfahrzeug zum Zeitpunkt der Auslösung der Sicherheitsaktuatorik aufgrund einer Pose in einem Fahrersitz steuern bzw. kontrollieren kann. Eine Güte einer derartigen Kontrollierbarkeit ist dabei direkt proportional zu einer Güte einer Sitzposition.

Vorteilhaft können auf diese Weise negative Auswirkungen von Fehlklassifizierungen der vorhandenen Sicherheitssysteme gemildert werden. Dadurch wird günstiger Weise eine unter Umständen nicht mehr umkehrbare Entziehung einer Kontrolle des Fahrers über das Kraftfahrzeug, die zum Beispiel durch ein Wegziehen des Lenkers vom Lenkrad durch ein Zurückfahren des Fahrersitzes ausgelöst wird, verhindert bzw. in ihrer Wirkung stark reduziert.

Das erfindungsgemäße System ist für jegliche Sicherheitsaktuatorik des Kraftfahrzeugs geeignet, beispielsweise auch für eine Sicherheitsaktuatorik zur Beeinflussung eines Lenk- und/oder eines Brems- und/oder eines Geschwindigkeitsverhaltens des Kraftfahrzeugs. Selbstverständlich sind die beschriebenen Prinzipien zur Erfassung der Sitzposition lediglich beispielhaft und können um jegliche geeigneten physikalischen Sensorsysteme ergänzt oder von solchen ersetzt werden.

## Patentansprüche

1. Verfahren zum Ansteuern von Sicherheitsaktuatorik (70) eines Kraftfahrzeugs, aufweisend:
- Ermitteln eines Gefährdungsmodells (40) des Kraftfahrzeugs mittels vorausschauender Sensorik und wenigstens eines Kennwerts (10, 20) einer Pose eines Fahrers des Kraftfahrzeugs; **gekennzeichnet durch**
- Ermitteln einer Kontrollierbarkeit (41) des Kraftfahrzeugs **durch** einen Fahrer des Kraftfahrzeugs mittels des wenigstens einen Kennwerts (10, 20); und
- Ansteuern der Sicherheitsaktuatorik (70) in einem Ausmaß, welches vom Gefährdungsmodell (40) und von der Kontrollierbarkeit (41) abhängt.

2. Verfahren nach Anspruch 1, wobei der wenigstens eine Kennwert (10, 20) durch ein Ausmaß eines Kontakts des Fahrers mit einer Rückenlehne (81) einer Fahrzeugsitzeinrichtung (80) definiert ist.

3. Verfahren nach Anspruch 2, wobei der wenigstens eine Kennwert (10, 20) aus einer Neigung der Rückenlehne (81) ermittelt wird.

4. Verfahren nach Anspruch 1, wobei der wenigstens eine Kennwert (10, 20) mittels eines Ultraschallsensors und/oder mittels eines Kontaktsensors und/oder mittels einer optischen Erfassungseinrichtung ermittelt wird.

5. Verfahren nach Anspruch 1, wobei der wenigstens eine Kennwert (10, 20) durch eine Haltung einer Lenkeinrichtung (30) durch den Fahrer definiert ist, wobei eine Abweichung der Haltung von einer vordefinierten Haltung ermittelt wird.

6. Verfahren nach Anspruch 5, wobei die Haltung mittels eines Kontaktsensors und/oder eines Winkelsensors ermittelt wird.

7. Verfahren nach Anspruch 5 oder 6, wobei ein Lenkeinrichtungswinkel mit einem von einem Gierratensensor erfassten Gierwinkel des Kraftfahrzeugs korelliert wird.

8. Verfahren nach einem der Ansprüche 1 bis 7, wobei beim Ansteuern der Sicherheitsaktuatorik (70) ein Fahrzeugsitzeinrichtungs-basiertes Rückhaltemittel verstellt wird.

9. Verfahren nach Anspruch 8, wobei wenigstens eine Ebene der Fahrzeugsitzeinrichtung (80) verstellt wird.

10. Verfahren nach Anspruch 8 oder 9, wobei das Verstellen des Fahrzeugsitzeinrichtungs-basierten Rückhaltemittels im Wechselspiel mit einem Verstellen einer Gurtstraffereinrichtung des Kraftfahrzeugs durchgeführt wird.

11. Verfahren nach einem der Ansprüche 8 bis 10, wobei ein Ausmaß eines Verstellwegs und/oder eine Verstellgeschwindigkeit des Fahrzeugsitzeinrichtungs-basierten Rückhaltemittels in Abhängigkeit vom Gefährdungsmodell (40) und von der Kontrollierbarkeit (41) des Kraftfahrzeugs ausgebildet ist.

12. Verfahren nach einem der vorhergehenden Ansprüche, wobei die vorausschauende Sensorik zur Ermittlung einer Vorphase eines Front-, und/oder eines Seiten- und/oder eines Heckaufpralls des Kraftfahrzeugs verwendet wird.

13. Verfahren nach einem der vorhergehenden Ansprüche, wobei das Gefährdungsmodell (40) als ein Produkt einer Aufprall-Wahrscheinlichkeit mit einer vorausermittelten Aufprall-Schwere des Kraftfahrzeugs ausgebildet ist.

14. Verfahren nach einem der vorhergehenden Ansprüche, wobei das Verfahren mittels eines Algorithmus (50) implementiert ist.

15. Verfahren nach Anspruch 14, wobei zu einem Wechsel zwischen Stützstellen des Algorithmus (50) eine Nachschlagetabelle oder eine Interpolation verwendet wird.

16. Vorrichtung aufweisend ein Computerprogrammprodukt mit einem Computerprogramm, welches Softwaremittel zur Ausführung des Verfahrens nach einem der Ansprüche 1 bis 15 aufweist.

## Claims

1. Method for controlling a safety actuator system (70) of a motor vehicle, comprising:
- determination of a hazard model (40) of the motor vehicle by means of a predictive sensor system and at least one characteristic value (10, 20) of a pose of a driver of the motor vehicle; **characterized by**
- determination of a controllability (41) of the motor vehicle by a driver of the motor vehicle by means of the at least one characteristic value (10, 20); and
- control of the safety actuator system (70) to a degree which depends on the hazard model (40) and on the controllability (41).

2. Method according to Claim 1, wherein the at least one characteristic value (10, 20) is defined by a degree of contact of the driver with a backrest (81) of a vehicle seat device (80).

3. Method according to Claim 2, wherein the at least one characteristic value (10, 20) is determined from an inclination of the backrest (81).

4. Method according to Claim 1, wherein the at least one characteristic value (10, 20) is determined by means of an ultrasonic sensor and/or by means of a contact sensor and/or by means of an optical sensing device.

5. Method according to Claim 1, wherein the at least one characteristic value (10, 20) is defined by the driver by means of a position of a steering device (30), wherein a deviation of the position from a predefined position is determined.

6. Method according to Claim 5, wherein the position is determined by means of a contact sensor and/or an angle sensor.

7. Method according to Claim 5 or 6, wherein a steering device angle is correlated with a yaw angle of the motor vehicle which is sensed by a yaw rate sensor.

8. Method according to one of Claims 1 to 7, wherein during the control of the safety actuator system (70) a vehicle seat device-based restraint means is adjusted.

9. Method according to Claim 8, wherein at least one plane of the vehicle seat device (80) is adjusted.

10. Method according to Claim 8 or 9, wherein the adjustment of the vehicle seat device-based restraint means is carried out in an alternating fashion with adjustment of a seat belt pretensioner device of the motor vehicle.

11. Method according to one of Claims 8 to 10, wherein an extent of an adjustment travel and/or an adjustment speed of the vehicle seat device-based restraint means are/is embodied as a function of the hazard model (40) and the controllability (41) of the motor vehicle.

12. Method according to one of the preceding claims, wherein the predictive sensor system is used to determine a preliminary phase of a front impact and/or side impact and/or rear impact of the motor vehicle.

13. Method according to one of the preceding claims, wherein the hazard model (40) is embodied as a product of an impact probability with a degree of impact severity of the motor vehicle which is determined in advance.

14. Method according to one of the preceding claims, wherein the method is implemented by means of an algorithm (50).

15. Method according to Claim 14, wherein a look-up table or interpolation is used for a changeover between reference points of the algorithm (50).

16. Device having a computer program product with a computer program which has software means for carrying out the method according to one of Claims 1 to 15.

## Revendications

1. Procédé de commande d'un système d'actionnement de sécurité (70) d'un véhicule à moteur, consistant à :
- déterminer un modèle de mise en danger (40) du véhicule à moteur au moyen d'un système de capteur prévisionnel et au moins une valeur caractéristique (10, 20) d'une attitude du conducteur du véhicule à moteur ; **caractérisé par** l'étape consistant à
- déterminer une contrôlabilité (41) du véhicule à moteur par un conducteur du véhicule à moteur au moyen de l'au moins une valeur caractéristique (10, 20) ; et
- commander le système d'actionnement de sécurité (70) à un degré qui dépend du modèle de mise en danger (40) et de la contrôlabilité (41).

2. Procédé selon la revendication 1, dans lequel l'au moins une valeur caractéristique (10, 20) est définie par un degré de contact du conducteur avec un dossier (81) d'un système de siège de véhicule (80).

3. Procédé selon la revendication 2, dans lequel l'au moins une valeur caractéristique (10, 20) est déterminée à partir d'une inclinaison du dosser (81).

4. Procédé selon la revendication 1, dans lequel l'au moins une valeur caractéristique (10, 20) est déterminée au moyen d'un capteur à ultrasons et/ou au moyen d'un capteur de contact et/ou au moyen d'un dispositif de détection optique.

5. Procédé selon la revendication 1, dans lequel l'au moins une valeur caractéristique (10, 20) est définie par le conducteur sur la base d'une attitude d'un dispositif de conduite (30), dans lequel un écart de l'attitude par rapport à une attitude prédéfinie est déterminé.

6. Procédé selon la revendication 5, dans lequel l'attitude est déterminée au moyen d'un capteur de contact et/ou d'un capteur angulaire.

7. Procédé selon la revendication 5 ou 6, dans lequel un angle du dispositif de conduite est corrélé à un angle de lacet détecté par un capteur de vitesse de lacet du véhicule à moteur.

8. Procédé selon l'une quelconque des revendications 1 à 7, dans lequel, lors de la commande du système d'actionnement de sécurité (70), un moyen de soutien dorsal à base de système de siège de véhicule est réglé.

9. Procédé selon la revendication 8, dans lequel au moins un plan du système de siège de véhicule (80) est réglé.

10. Procédé selon la revendication 8 ou 9, dans lequel le réglage du moyen de soutien dorsal à base de système de siège de véhicule est effectué en alternance avec un réglage d'un système raidisseur de ceinture du véhicule à moteur.

11. Procédé selon l'une quelconque des revendications 8 à 10, dans lequel un niveau de course de réglage et/ou une vitesse de réglage du moyen de soutien dorsal à base de système de siège de véhicule est établi en fonction d'un modèle de mise en danger (40) et de la contrôlabilité (41) du véhicule à moteur.

12. Procédé selon l'une quelconque des revendications précédentes, dans lequel le système de capteur prévisionnel est utilisé pour déterminer une phase préalable à un choc avant et/ou latéral et/ou arrière du véhicule à moteur.

13. Procédé selon l'une quelconque des revendications précédentes, dans lequel le modèle de mise en danger (40) est établi sous la forme d'un produit d'une probabilité de choc par une intensité de choc déterminée à l'avance pour le véhicule à moteur.

14. Procédé selon l'une quelconque des revendications précédentes, dans lequel le procédé est mis en oeuvre au moyen d'un algorithme (50).

15. Procédé selon la revendication 14, dans lequel une table de consultation ou une interpolation est utilisée lors d'une modification entre des points de support de l'algorithme (50).

16. Dispositif comprenant un produit de programme informatique comportant un programme informatique qui comprend des moyens logiciels destinés à mettre en oeuvre le procédé selon l'une quelconque des revendications 1 à 15.
